# EUROPEAN PATENT APPLICATION

(11) **EP 2 827 226 A2**
(43) Date of publication of application: **21.01.2015**
(21) Application number: 13005134.5
(22) Date of filing: 29.10.2013
(51) Int. Cl.: G06F 3/0346, G06F 1/16, G06F 1/32, G06F 3/01

(54) **Watch type mobile terminal**

(30) Priority: 18.07.2013 KR 20130084567
(71) Applicant: LG Electronics, Inc., Seoul, 150-721 (KR)
(72) Inventor: Gyuseog, Hong, 137-724 Seoul (KR)
(74) Representative: Beyer, Andreas

(57) **Abstract**

There is disclosed a watch type mobile terminal including a display configured to display a first image information, a case of which a front surface the display is coupled to, a strap connected to the case and securely wound around a user's arm, a position sensor configured to sense inclination of the case and variation of a position of the case, and a controller configured to convert a state of the display into an activated state from a deactivated state, when position variation corresponding to a preset activating gesture is sensed by the position sensor, such that the screen of the watch type mobile terminal may be activated without the user's pressing an auxiliary button and that use convenience may be enhanced accordingly.

## Description

### CROSS-REFERENCE TO RELATED APPLICATION(S)

This application claims priority to Korean Application No. 10-2013-0084567 filed in Korea on July 18, 2013, whose entire disclosure is hereby incorporated by reference.

### BACKGROUND

### 1. Field

A watch type mobile terminal is provided herein.

### 2. Background

There exists conventional mobile terminals that can be hand carried and has one or more functions such as voice and video call communication, inputting and outputting information, storing data, and the like.

As such functions become more diversified, the mobile terminal can support more complicated functions such as capturing images or video, reproducing music or video files, playing games, receiving broadcast signals, and the like. By comprehensively and collectively implementing such functions, the mobile terminal may be embodied in the form of a multimedia player or device.

In order to implement various functions, numerous attempts are being made in terms of hardware or software. For example, a user interface is provided to allow users to easily and conveniently search for and select one or more functions.

Also, as users consider their mobile terminal to be a personal portable device, various designs may be applied for mobile terminals to express personality of users.

Conventional mobile terminals are sized to be held in hand, so users carry around their mobile terminal in a hand-held manner or carry around their mobile terminal in pockets, purses or belt clips. However, conventional handheld mobile terminals can easily be lost or inadvertently dropped while being carried around. A watch type mobile terminal that can be put on like a wristwatch have been proposed.

For that, a mobile terminal that can be put on like a watch and the position of such a watch type mobile terminal is changed as the user's body moves. In addition, the hand capable of implementing input to the watch type mobile terminal is determined according to the position of the arm where the watch type mobile terminal is put on. Accordingly, it is necessary to provide convenient input environments to the hand for implementing the input.

### SUMMARY OF THE DISCLOSURE

Accordingly, the present invention is directed to a mobile terminal that substantially obviates one or more problems due to limitations and disadvantages of the related art.

An object of the present invention is to provide a watch type mobile terminal y which can activate a display simply.

To achieve these objects and other advantages and in accordance with the purpose of the invention, as embodied and broadly described herein, a watch type mobile terminal includes a display configured to display a first image information; a case of which a front surface the display is coupled to; a strap connected to the case and securely wound around a user's arm; a position sensor configured to sense at least one of inclination of the case and variation of a position of the case; and a controller configured to convert a state of the display into an activated state from a deactivated state, when inclination variation or position variation corresponding to a preset activating gesture is sensed by the position sensor.

The activating gesture may include a first gesture which moves in a perpendicular direction with respect to a direction of the gravity, in a state where the case is tilted to position the display toward a lateral surface; and a second gesture which stops in a state where the display is arranged in the reverse direction of the gravity.

The controller may control a lower portion of a screen to be positioned in a direction of the movement according to the first gesture of the display, the screen displayed when the state of the display is converted into the activated state.

The controller may determine that the watch type mobile terminal is put on the user's right arm, when the direction of the movement according to the first gesture is (+) with respect to the gravity, and determine that the watch type mobile terminal is put on the user's left arm, when the direction of the movement according to the first gesture is (-) with respect to the gravity.

The controller may determine whether the watch type mobile terminal is put on the user's right arm or left arm based on the inclination sensed by the position sensor, and the controller may control a screen of a left hand mode to be displayed on the display when it is determined that the watch type mobile terminal is put on the right arm and a screen of a right hand mode to be displayed on the display when it is determined that the watch type mobile terminal is put on the left arm.

The controller may determine that the watch type mobile terminal is put on the left arm in case the case is tilted in a left direction when the state of the display into an activate state, and that the watch type mobile terminal is put on the right arm in case the case is tilted in a right direction when the state of the display into an activate state.

The controller may determine whether the watch type mobile terminal is put on the right arm or the left arm based on a main inclination sensed by the position sensor in the deactivated state of the display.

In the screen of the left hand mode, at least one of an input button, a scroll index and a specific menu entry button may be provided in a left portion. In the screen of the right hand mode, at least one of the input button, the scroll index and the specific menu entry button may be provided in a right portion.

The watch type mobile terminal may further include a touch button provided in a lateral surface of the case, the touch button of which a position is changeable wherein the controller determines whether the watch type mobile terminal is put on the user's right arm or left arm based on the inclination sensed by the position sensor, and the controller controls the button is positioned at left lateral surface, when it is determined that the watch type mobile terminal is put on the right arm and the button is positioned at right lateral surface, when it is determined that the watch type mobile terminal is put on the left arm.

The controller may convert the state of the display into the deactivated state, when a front surface of the case is out of a preset range of usage angles for a preset time period.

The usage angles may include angles of 30° or less in a right and left direction, angles of 60° or less in a downward direction and angles of 10° or less in an upward direction, with respect to a flat state.

The position sensor may be an acceleration sensor which senses the position variation by measuring variation of the acceleration.

The position sensor may be a gyrosensor which senses the position variation by measuring variation of an angular velocity.

The watch type mobile terminal may further include a short range communication module configured to transmit a second image information to an external device and to receive a touch signal input to the external terminal, wherein the controller controls the short range communication module to synchronize the watch type mobile terminal with the external terminal to transmit the second image information to the external terminal and to receive the touch signal output to the external terminal, when the position sensor senses position variation corresponding to a preset synchronizing gesture.

The controller may determine that the synchronizing gesture is input, when the same vibration is sensed in the watch type mobile terminal and the external mobile simultaneously and when the short range communication module senses that the distance between the watch type mobile terminal and the external terminal is a synchronization distance or less.

The second image information may be a right hand mode, when the first image information is a left hand mode. The second image information is a left hand mode, when the first image information is a right hand mode.

The watch type mobile terminal may further include a moving module configured to move the position of the case from the user's arm along the strap, wherein the controller controls the moving module to position the display toward the reverse direction of the gravity, when the position sensor senses that the display of the watch type mobile terminal synchronized with the external terminal is toward the gravity.

The second image information may be the left hand mode when the first image information is the left hand mode and the second image information may be the right hand mode when the first image information is the right hand mode, in case the position sensor senses that the display of the watch type mobile terminal synchronized with the external terminal is toward the gravity.

The case and the strap may be provided in a flexible display device which is wound around the user's wrist, with the first image information displayed on a predetermined portion thereof, and the first image information may be displayed on a predetermined portion of the flexible display device in the reverse direction of the gravity, in the deactivated state with the external device.

The first image information may include a plurality of selectable objects, and the second image information may be a screen corresponding to the selected object from the display of the watch type mobile terminal.

The controller may display a plurality of images when the display is activated, and the plurality of the screens may be selected from recently used applications, most frequently used applications and applications associated with a user's current position in accordance with one criterion.

According to at least one embodiment of the present invention, the screen of the watch type mobile terminal 100 may be activated, without the user's pressing an auxiliary button. Accordingly, use convenience may be enhanced.

Furthermore, the user interface and button proper to the hand carrying out the touch input may be provided by sensing in which arm the user is putting on the watch type mobile terminal. Accordingly, use convenience may be further enhanced.

Still further, the watch type mobile terminal may be in communication with the external terminal 200. The difficulties in carrying out touch input caused by the small screen and the deteriorated visibility may be may be overcome.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### BRIEF DESCRIPTION OF THE DRAWINGS

The embodiments will be described in detail with reference to the following drawings in which like reference numerals refer to like elements wherein:
Figure 1 is a block diagram of a watch type mobile terminal according to one embodiment of the present disclosure;
Figure 2 is a perspective diagram illustrating a state where a user is putting on the watch type mobile terminal according to one embodiment of the present disclosure;
Figure 3A is a diagram illustrating a gesture for activating the watch type mobile terminal according to one embodiment of the present disclosure;
Figure 3B is a diagram illustrating one embodiment of a screen when activating the watch type mobile terminal according to one embodiment of the present disclosure;
Figure 4A is a diagram illustrating a state in which the watch type mobile terminal is worn on the right arm of a user according to one embodiment of the present disclosure;
Figure 4B is a diagram illustrating a state in which the watch type mobile terminal is worn on the left arm of a user according to one embodiment of the present disclosure;
Figures 5A to 5B are diagrams illustrating a user interface (UI) configured to unlock the watch type mobile terminal according to one embodiment of the present disclosure;
Figures 6A and 6B are diagrams illustrating a screen having a scroll configured to move to a screen not displayed on a display of the watch type mobile terminal according to one embodiment of the present disclosure;
Figures 7A and 7B are diagrams illustrating a screen including an input window configured to input characters in the mobile terminal according to one embodiment of the present disclosure;
Figures 8A and 8B are diagrams illustrating a setting screen of the watch type mobile terminal according to one embodiment of the present disclosure;
Figure 9 is a diagram illustrating a usage angle of the mobile terminal according to one embodiment of the present disclosure; and
Figures 10 to 12 are diagrams illustrating an embodiment that the watch type mobile terminal according to one embodiment of the present disclosure is synchronized with an external terminal.

### DETAILED DESCRIPTION

In the following detailed description, reference is made to the accompanying drawing figures which form a part hereof, and which show by way of illustration various embodiments.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

Referring to the accompanying drawings, a watch type mobile terminal 100 according to one embodiment of the present disclosure will be described in detail as follows. Reference may now be made in detail to specific embodiments, examples of which may be illustrated in the accompanying drawings. Wherever possible, same reference numbers may be used throughout the drawings to refer to the same or like parts.

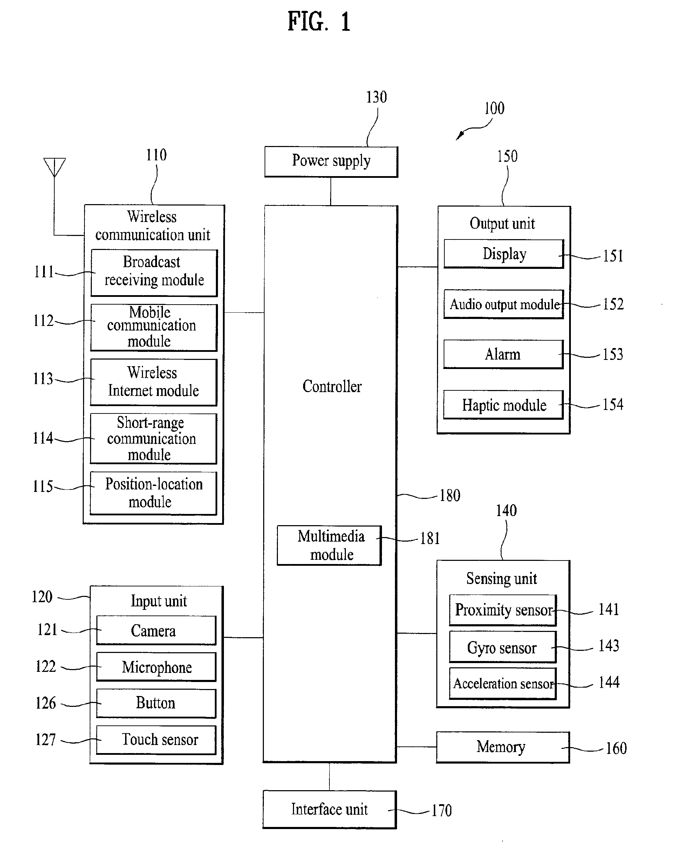

Figure 1 is a block diagram of a mobile terminal 100 in accordance with an embodiment as broadly described herein. The watch type mobile terminal 100 may include a wireless communication unit 110, an input unit 120, a user input unit 130, a sensing unit 140, an output unit 150, a memory 160, an interface unit 170, a controller 180, a power supply unit 190 and the like. Figure 1 shows the watch type mobile terminal 100 having various components, but it is understood that implementing all of the illustrated components is not a requirement. Greater or fewer components may alternatively be implemented. In the following description, the above elements of the watch type mobile terminal 100 are explained in sequence.

First of all, the wireless communication unit 110 typically includes one or more components which permits wireless communication between the watch type mobile terminal 100 and a wireless communication system or network within which the watch type mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided to the watch type mobile terminal 100 in pursuit of simultaneous receptions of at least two broadcast channels or broadcast channel switching facilitation.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The wireless internet module 113 supports Internet access for the watch type mobile terminal 100. This module may be internally or externally coupled to the watch type mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

Near Field Communication (NFC) which is a type of RFID is the technology for transmitting data between terminals in near distance within 10m and such NFC technology allows terminals to transmit and receive data in a quite a short range, such that NFC is generally used in recharging a transportation card or opening/closing a door. NFC allows terminals to transmit and receive information and highly usable when it is applied to a portable terminal.

The position-location module 115 identifies or otherwise obtains the location of the watch type mobile terminal 100. If desired, this module may be implemented with a global positioning system (GPS) module. According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time information are calculated using three satellites, and errors of the calculated location position and time information are then amended using another satellite. Besides, the GPS module 115 is able to calculate speed information by continuously calculating a real-time current location.

The input unit 120 may be configured to provide audio or video signal input to the watch type mobile terminal 100. As shown, the input unit 120 includes a camera 121 and a microphone 122. The camera 121 receives and processes image frames of still pictures or video, which are obtained by an image sensor in a video call mode or a photographing mode. In addition, the processed image frames can be displayed on the display 151 of the output unit 150.

The image frames processed by the camera 121 can be stored in the memory 160 or can be externally transmitted via the wireless communication unit 110. Optionally, at least two cameras 121 can be provided to the watch type mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 may include assorted noise removing algorithms to remove noise generated in the course of receiving the external audio signal.

The button is provided in front, back or lateral side of the watch type mobile terminal 100 and it receive a signal by sensing a pressure. The touch sensor 127detects variation of the pressure or capacitance that is generated by the touch created by the user's finger. Especially, the touch sensor 127and the display form may be layered or integrally formed with each other. In this instance, the display 151 may perform two functions as an output device and an input device.

The power supply unit 130 may is supplied an external power or an internal power by controlling of the controller 180 and supply the power required to implement operations of the elements. For instance, the power supply unit 130 may include a battery, a connecting port, a power supply control unit and a charging monitoring unit.

The battery may be an embedded battery that can be recharged and it may be detachably loaded in a terminal body for recharging. The connecting port may be used as the interface 170 electrically connected with an external charger for supplying the power in order to recharge the batter.

The sensing unit 140 senses the current state of the mobile terminal 100 such as the position of the watch type mobile terminal 100, presence of the user's touch, the direction of the mobile terminal, acceleration/deceleration of the mobile terminal and generates a sensing signal to control the operations of the mobile terminal 100. The sensing unit 140 may include a proximity sensor 141, a gyrosensor 143 and an acceleration sensor 144.

The proximity sensor 141 is a sensor configured to detect the presence of an object approaching a predetermined detection surface or existing nearby by using an electronic force or an infrared ray, without mechanical contact. The proximity sensor 141 lasts longer and is more useful than a contact sensor.

Examples of the proximity sensor 141 include a transmission photosensor, a direct reflection photosensor, a mirror reflection photosensor, a high-frequency oscillation type proximity sensor, a capacitive proximity sensor, a magnetic proximity sensor and an infrared proximity sensor.

The gyrosensor 143 is an angular velocity sensor configured to detect an angular velocity, specifically, which detects angular variation of three shafts. The gyrosensor calculates the angle of an object rotated on a shaft for a unit time period and a small-sized gyrosensor can be used in detecting the velocity, distance and position of the watch type mobile terminal 100.

The acceleration sensor 144 can sense motional states of an object sequentially by sensing a dynamic force, for instance, acceleration, vibration and external shocks. The acceleration sensor 144 is classified into a dynamic acceleration sensor and a thermo acceleration sensor. When a piezoelectric conductor for calculating acceleration by detecting the electric charge generated when a predetermined force is applied to a piezoelectric element is detected is moving in a magnetic field, an electromotive force is generated in proportion to the velocity of the moving conductor and the dynamic acceleration sensor detects the acceleration of the detected electromotive force. The thermo acceleration sensor calculates the acceleration by detecting electric currents from the variation of electrons. The acceleration sensor 144 or the gyrosensor 143 detects the position of the mobile terminal 100 and may be referenced to as the position sensors 143 and 144.

The output unit 150 may generate outputs relevant to the senses of sight, hearing, touch and the like. The output unit 150 includes the display 151, an audio output module 152, an alarm unit 153, and a haptic module 154 and the like.

The display 151 may be implemented to visually display (output) information associated with the watch type mobile terminal 100. For instance, if the watch type mobile terminal is operating in a phone call mode, the display may provide a user interface (UI) or graphical user interface (GUI) which includes information associated with placing, conducting, and terminating a phone call. As another example, if the watch type mobile terminal 100 is in a video call mode or a photographing mode, the display 151 may additionally or alternatively display images which are associated with these modes, the UI or the GUI.

The display 151 may be implemented using known display technologies including, for example, a liquid crystal display (LCD), a thin film transistor-liquid crystal display (TFT-LCD), an organic light-emitting diode display (OLED), a flexible display and a three-dimensional display. The watch type mobile terminal 100 may include one or more of such displays.

Some of the above displays can be implemented in a transparent or optical transmittable type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 may be provided to the watch type mobile terminal 100 in accordance with the implemented configuration of the watch type mobile terminal 100. For instance, a plurality of displays can be arranged on a single face of the watch type mobile terminal 100 in a manner of being spaced apart from each other or being built in one body. Alternatively, a plurality of displays can be arranged on different faces of the watch type mobile terminal 100.

In case that the display 151 and the touch sensor 137 configures a mutual layer structure (hereinafter called 'touchscreen'), it is able to use the display 151 as an input device as well as an output device. In this case, the touch sensor may be configured as a touch film, a touch sheet, a touchpad or the like.

The touch sensor 137 can be configured to convert a pressure applied to a specific portion of the display 151 or a variation of a capacitance generated from a specific portion of the display 151 to an electric input signal. Moreover, it is able to configure the touch sensor 137 to detect a pressure of a touch as well as a touched position or size.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the watch type mobile terminal 100. Typical events include a call received event, a message received event and a touch input received event. The alarm unit 153 is able to output a signal for announcing the event occurrence by way of vibration as well as video or audio signal. The video or audio signal can be output via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be output in a manner of being synthesized together or can be output in sequence.

The memory unit 160 is generally used to store various types of data to support the processing, control, and storage requirements of the watch type mobile terminal 100. Examples of such data include program instructions for applications operating on the watch type mobile terminal 100, contact data, phonebook data, messages, audio, still pictures (or photo), moving pictures, etc. In addition, a recent use history or a cumulative use frequency of each data (e.g., use frequency for each phonebook, each message or each multimedia) can be stored in the memory unit 160. Moreover, data for various patterns of vibration and/or sound output in case of a touch input to the touchscreen can be stored in the memory unit 160.

The interface unit 170 is often implemented to couple the watch type mobile terminal 100 with external devices. The interface unit 170 receives data from the external devices or is supplied with the power and then transfers the data or power to the respective elements of the watch type mobile terminal 100 or enables data within the watch type mobile terminal 100 to be transferred to the external devices.

The interface unit 170 may be configured using a wired/wireless headset port, an external charger port, a wired/wireless data port, a memory card port, a port for coupling to a device having an identity module, audio input/output ports, video input/output ports, an earphone port and/or the like.

The controller 180 may control the overall operations of the watch type mobile terminal 100. For example, the controller 180 may performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

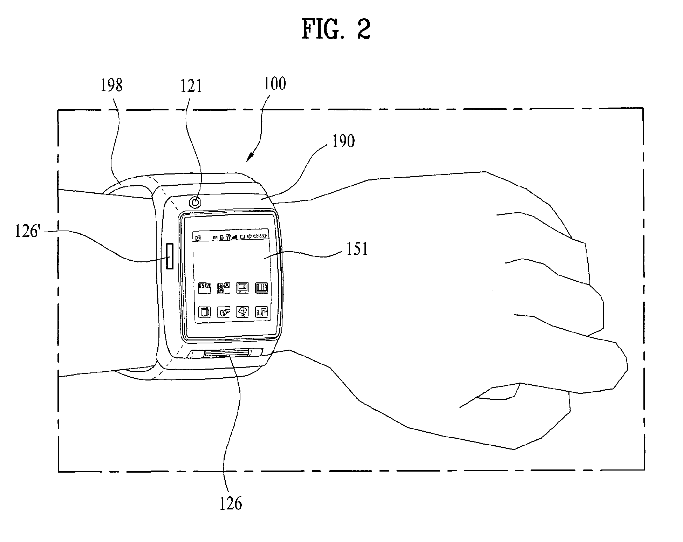

Figure 2 is a perspective diagram illustrating a state where a user is putting on the watch type mobile terminal according to one embodiment of the present disclosure. The watch type mobile terminal 100 includes the case 190 having the display 151 arranged in an outer surface thereof to display visual information. The terminal case 190 is connected to straps 198 formed to be put on a human body part such as a wrist or an arm.

The case 190 may include a top case and a bottom case. Various electronic parts may be mounted in a predetermined space formed between the top case and the bottom case.

In some cases, electronic parts may be mounted in a surface of the bottom case the electronic parts mounted in the surface of the bottom surface may include a battery, a USIM card and a memory card which are mountable and demountable by the user. At this time, the bottom case may further include a back cover configured to cover the surface and the back cover has a structure allowing the user to mount or demount the back cover easily. When the back cover is demounted, the surface of the bottom case is exposed.

The case 190 may be injection-molded of a synthetic resin material or formed of a metallic material, for instance, stainless steel (STS) or titanium (Ti). In the case may be arranged the display 151, the audio output module 152, the camera 121, the user input unit 126 and 126' and the microphone 122.

The display 151 occupies most of a main surface possessed by the top case. The audio output module 152, the camera 121, the user input unit 126 and 126' and the microphone may be arranged near the display 151.

The button 126 arranged in a predetermined portion of the case 190 receives input of the user's command. Shown in the drawings, the button 126 may be arranged below the display 151 or beside the display 151. Rather than the button 126 configured to generate a signal carried out by a physical pressure, there may be further provided a button 126' configured to generate a signal carried out by touch input.

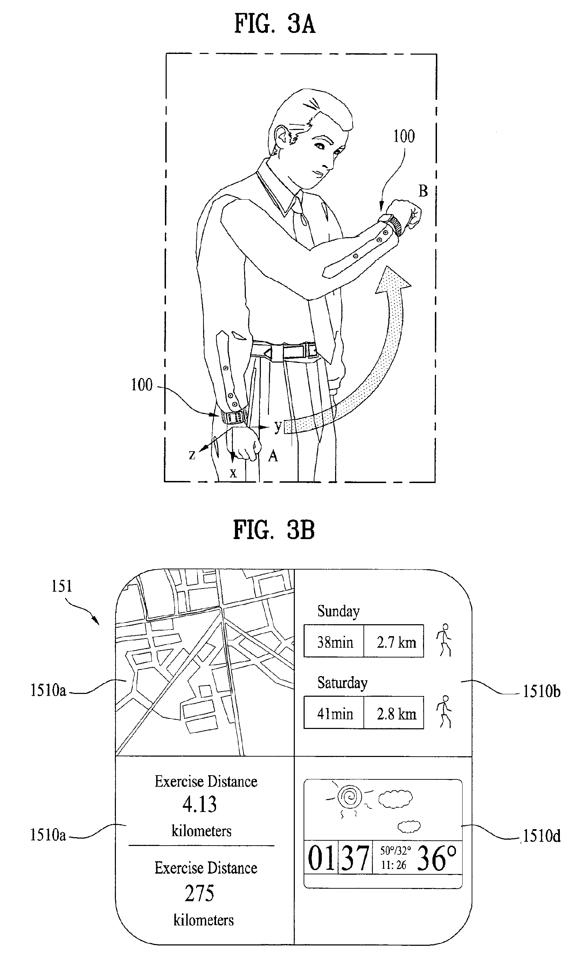

Figure3A is a diagram illustrating a gesture for activating the watch type mobile terminal 100 according to one embodiment. When the user tries to use the watch type mobile terminal 100, it is sensed that the arm is raised (B) to position the watch type mobile terminal 100 in the user's line of sight, from a state where the user has the hands down in a direction of the gravity (A). After that, the controller 180 recognizes the movement as an activating gesture for the user to use the watch type mobile terminal 100 and it activates the watch type mobile terminal 100.

The activating gesture includes, for example, a first gesture that moves along a direction ('y' direction) perpendicular to a direction of the gravity ('x' direction), in a state where the display 151 is inclined toward or facing a lateral surface (or lateral direction, e.g., 'z' direction), and a second gesture that stops in a state where the display is arranged toward an opposite direction of the gravity (`x' direction).

The lateral surface in which the display 151 is facing toward in the first gesture may not necessarily mean 90° with respect to the direction of the gravity ('x'direction),and it may means that the display 151 is toward the lateral surface in a preset error range (e.g. more than 60° or less than 120°).

In addition, an angle of the direction perpendicular to the direction of the gravity ('y' direction) may not necessarily 90°, but it may mean that the direction is moved along a perpendicular direction ('y' direction) in a predetermined error range (e.g. more than 70° or less than 110° in the direction of the gravity).

The term of 'activating' may mean that the screen of the display 151 is turned on to be a state where the user can implement touch input to the screen. When the screen locked by the user is activated, a screen for unlocking (e.g. a screen for entering a password or pattern) is output on the display 151.

When the watch type mobile terminal is not locked, the screen used until the display 151 is turned off may be displayed on the display 151. As shown in Figure3B, a plurality of screens 1510a, 1510b, 1510c and 1510d may be displayed simultaneously when the display 151 is activated.

The screens 1510a, 1510b, 1510c and 1510d may be selected from recently used applications, most frequently used applications, applications associated with the user's place and preferred applications set by the user, based on preset criterion. For instance, when the display 151 is divided into four screens 1510a, 1510b, 1510c and 1510d, four most recently used applications are displayed on the screens correspondingly or four most frequently used applications in the latest week are displayed correspondingly.

The user's current position is determined by using GPS and a screen associated with the position may be displayed. For instance, when the user is positioned in a mountain, the current position in the mountain and a guide to a mountain trail and the height of the mountain may be provided. When GPS detects that the user is moving at 6km per hour, it is determined that the user is jogging and a screen of an application associated with jogging may be provided.

When a state of the display is changed as previously described from an inactive state to an active state, a preferred application set by the user may be displayed on the first screen displayed when the display is activated. Such the divided screens 1510a, 1510b, 1510c and 1510d can reduce steps of selecting menus and enhance user convenience accordingly.

At this time, the direction of the gravity may be sensed by the acceleration sensor 144 and a lower portion of the screen displayed on the display 151 may be controlled to be displayed. However, the watch type mobile terminal 100 is put on the user's arm and it may be tilted toward the arm having the watch type mobile terminal 100 put thereon as shown in Figure 3. Accordingly, there could be a disadvantage that the screen is output in a direction not corresponding to the user's line of sight.

In a state where the user raises the arm to position in the line of sight, an inner area of the arm (e.g. an area of the arm toward the user) may face downward. After that, the direction of movement in a state of 'A' (a direction of 'y'axis) is the direction of the inner arm of the arm, such that the lower portion of the screen displayed on the display 151 may be controlled to be displayed in the direction of the movement in the state of 'A'.

When the display 151 is activated by the activating gesture, the operation of pressing a button for activating the display 151 may be omitted and the user convenience may be enhanced. Moreover, the activating gesture may include various types of gestures or movements of the user. A final resting position of the mobile terminal 100 or orientation of the display may also be used to determine whether the user wishes to view the display. For example, a position or orientation of the display may be used to determine whether the display is within a viewing area for the user, and the state of the mobile terminal 100 may be changed when the mobile terminal 100 is moved within or outside the viewing area. These other types of gestures and positions used to activate or deactivate the mobile terminal 100 will be described later.

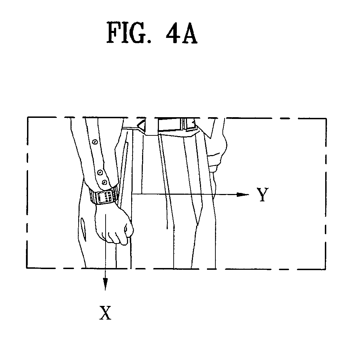

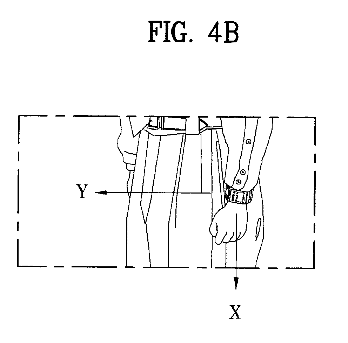

Next, Figure4A is a diagram illustrating a state in which the watch type mobile terminal 100 is worn on the right arm of a user according to one embodiment of the present disclosure. Figure4B is a diagram illustrating a state in which the watch type mobile terminal 100 is worn on the left arm of a user according to one embodiment of the present disclosure.

As shown in Figures4A and 4B, the user may move the arm along a direction perpendicular to the gravity (the direction of 'y'axis) in a state of lowering the arm in the direction of the gravity (a direction of 'x'axis), so as to create an activating gesture. As shown in Figure4A, the controller 180 may determine that the watch type mobile terminal 100 is put on the right arm when the direction of the movement is a first direction(+) and that it is put on the left arm when the direction of the movement is a second direction(-).

The direction (+) means the direction perpendicular in a counter-clockwise direction with respect to the direction of the gravity ('x'axis) and the direction (-) means the direction perpendicular in a clockwise direction with respect to the direction of the gravity.

The hand using the watch type mobile terminal 100 is changed in accordance with whether the watch type mobile terminal 100 is put on the left arm or the right arm. When it is put on the left arm, the watch type mobile terminal 100 is operated by the right hand. When put on the right arm, the watch type mobile terminal 100 is operated by the left hand.

To enhance the user convenience, the screens provided to the display 151 may be differentiated in accordance with a direction of the hand using to carry out input. In other words, when the watch type mobile terminal 100 is put on the left arm, a right hand mode screen may be provided to the display 151. When the watch type mobile terminal 100 is put on the right arm, a left hand mode screen may be provided to the display 151.

When the state of the display is into an activated state, not only the direction of the movement in the first gesture, in other words, when the inclination of the case 190 sensed by the position sensors 143 and 144 is toward a left direction once a second gesture is completed, it is determined that the watch type mobile terminal is put on the left arm. When the inclination is toward a right direction, it is determined that the watch type mobile terminal is put on the right arm. As shown in Figure3A, when the user usually raises the arm in a comfortable position, the watch type mobile terminal is inclined toward the arm wearing the mobile terminal.

When a top and a bottom of the case 190 are fixed, a top and a bottom of the screen displayed on the display 151 are not changed. The user may fix the strap 198 to position the bottom of the case 190 in a front direction (a direction of the user when the second gesture is completed)when the user lowers the arm in the direction of the gravity.

The arms are mostly toward the direction of the gravity in a deactivated state of the display. When a right portion of the watch type mobile terminal 100 is usually toward the direction of the gravity in the deactivated state, it is determined that the watch type mobile terminal 100 is put on the left arm. When a left portion is usually toward the direction of the gravity in the deactivated state, it is determined that the watch type mobile terminal 100 is put on the right arm.

The left hand mode (e.g., when watch is worn on the right arm) and the right hand mode (e.g., when watch is worn on the left arm) are different in which direction a touch input unit is provided. The touch input unit may include an input button 1513a and 1513b, a scroll index 1512 and 1512b and a specific menu entry button 1514a and 1514b. Also, the left hand mode and the right hand mode may be different in a sliding direction 1511a and 1511b.

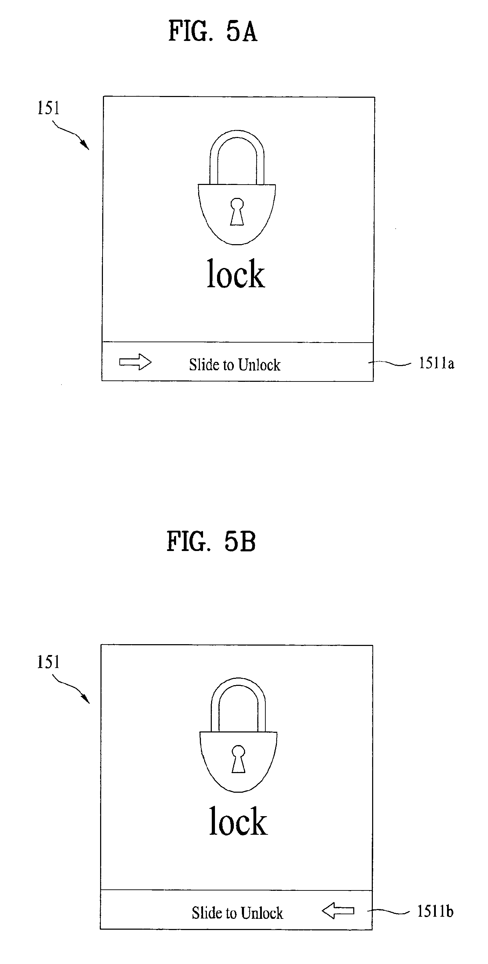

Referring to Figures5A to 8B, the differences in screen configurations of the left mode and the right hand mode will be described as follows.

Figures5A to 5B are diagrams illustrating a user interface (UI) configured to unlock the watch type mobile terminal according to one embodiment of the present disclosure. When the user slides the screen displayed on the display 151 to input a specific command, the screen may slide from a left direction to a right direction in the right hand mode as shown in Figure5B and the locked state of the screen may be unlocked.

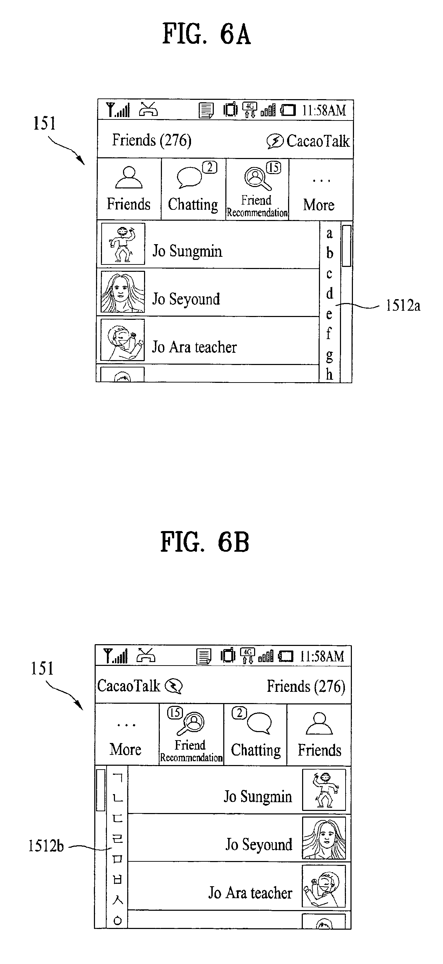

Figures6A and 6B are diagrams illustrating a screen having a scroll configured to move to a screen not displayed on the display 151 of the watch type mobile terminal 100 according to one embodiment. When moving a screen to see another screen, the scroll index 1512a and 1512b may be provided to move to a specific screen as shown in Figures6A and 6B.

When the scroll index 1512a and 1512b consists of a long list such as an address book, the user may touch the scroll index 1512a and 1512b to move to a specific screen. At this time, in the right hand mode the scroll index 1512a should be positioned in a right portion for the user to use the user index 1512b, not the right hand blocking the display, as shown in Figure6A. In the left hand mode, the scroll index 1512b should be positioned in a left portion for the user to use the user index 1512b, not the right hand blocking the display 151, as shown in Figure6B.

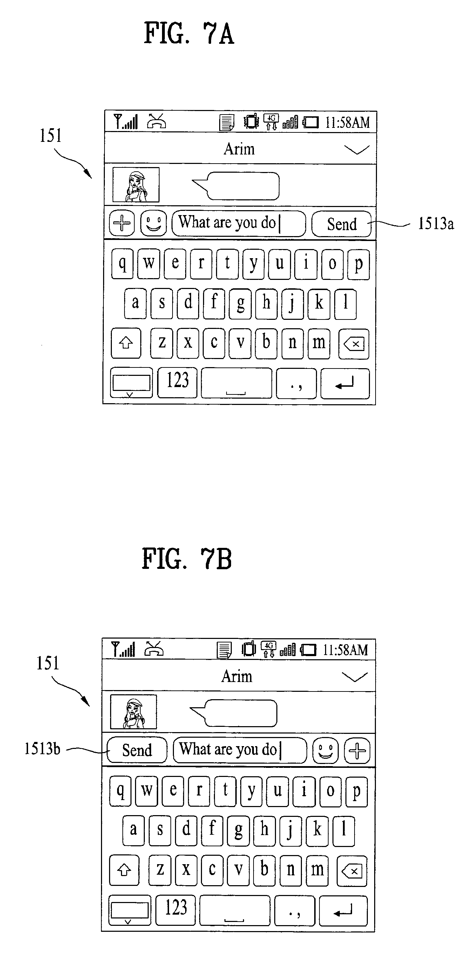

Figures7A and 7B are diagrams illustrating a screen including an input window configured to input characters in the mobile terminal 100 according to one embodiment of the present disclosure. An input button 1513a and 1513b is used frequently and the input button 1513a is positioned in a right portion in the right hand mode as shown in Figure7A. The input button is positioned in a left portion in the left hand mode as shown in Figure7B. In the drawings, only the position of the input button 1513a and 1513b is changed from the right portion to the left portion. Buttons used frequently may be provided in the left portion in the left hand mode and in the right portion in the right hand mode.

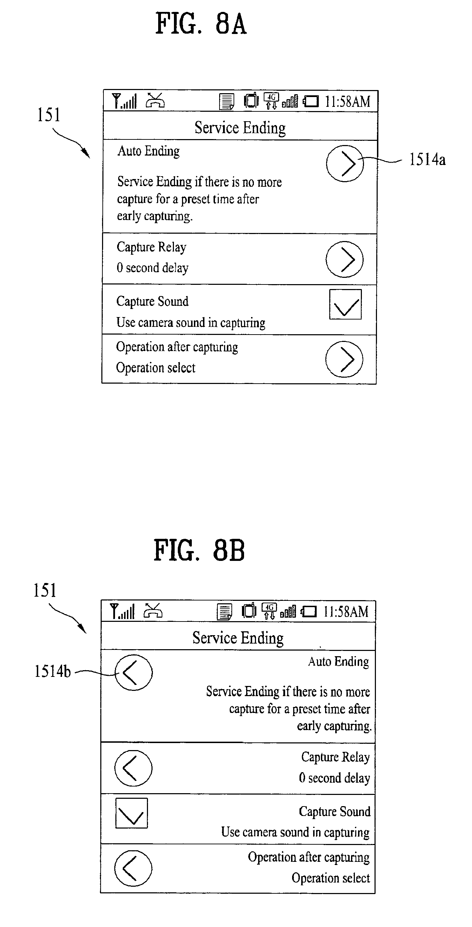

Figures8A and 8B are diagrams illustrating a setting screen of the watch type mobile terminal 100 according to one embodiment of the present disclosure. A button 1514a and 1514b configured to enter a menu divided into several steps such as a setting screen may be provided in a right portion 1514a in the right hand mode as shown in Figure8A and in a left portion 1514b in the left hand mode as shown in Figure8B. The lower menu entry button is provided in the different position in accordance with in the left hand mode and the right hand mode, such that the screen blocking caused with the pressing the lower menu entry button can be reduced as much as possible.

Not only the position of the UI provided on the screen but also the position of a touch button 126' provided in a lateral surface of the case 190 to carry out touch input may be different in the right hand mode from in the left hand mode. In other words, when it is determined that the watch type mobile terminal 100 is put on the left hand, the touch button 126' may be provided in a right portion. When it is determined that the watch type mobile terminal 100 is put on the right hand, the touch button 126' may be provided in a left portion.

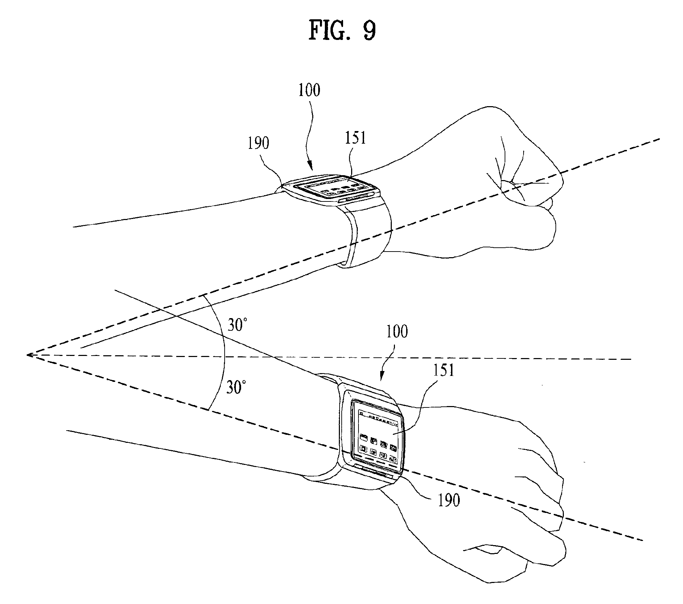

Figure 9 is a diagram illustrating a usage angle of the mobile terminal 100 according to one embodiment. When it is determined that the user is not viewing the screen of the watch type mobile terminal 100 anymore, the state of the display 151 may be converted from an active state to an inactive state. When the user is watching the display 151, the display 151 maintains a flat state. Accordingly, a predetermined range of angles with respect to the flat state which is kept for a preset time period may be a usage angle. The range of angles may correspond to a range of angles of the user's forearm in front of the user.

For example, as shown in Figure 9, angles of 30° or less in a left and right direction with respect to the flat state, and angles of 60° or less in an upward direction and angles of 10° or less in a downward direction may be may be set as usage angles. The flat state may be a horizontal position of the arm, parallel to the user. In the usage angles, it is determined that the user is watching the display 151 and the activated state is maintained. Out of the usage angles, it is determined that the user is not watching the display anymore and the state of the display 151 may be converted into the deactivated state. Moreover, the flat state may be initially determined based on the sensed movement and position of the display, for example, to be position B as illustrated in Figure 3A. The flat state may also be set based on detection of a position of the user, for example, using a position sensor or a front facing camera. The range of usage angles may be then be applied with reference to the flat state.

The behavior of the user may be used to determine the state of the mobile terminal 100 in other ways. For example, a state of the mobile terminal 100 may be changed from an inactive state to an active state, or vice versa, based on a final sensed position of the display or motion of the arm. Referring again to Figure 3A, it may be determined that the user wishes to view the display when the display is moved from position A to position B. However, the position of the mobile terminal 100 alone may be used. For example, a prescribed viewing area may be designated (e.g., position B) and the mobile terminal 100 may be turned on when it is moved into the viewing area. The prescribed viewing area may be set to be a position in front of the user within a prescribed distance from the user (e.g., the user's face or eyes). The angle of the display relative to the user may also be used. Here, a range of distances and angles may be set to define the prescribed viewing area for the user. Moreover, the display may be turned off when the mobile terminal 100 is moved outside the viewing area, or based on a prescribed amount of time.

Additionally, a height of the mobile terminal 100 may be used to determine when to active or deactivate the mobile terminal. For example, a user may wish to view the display by simply turning the display towards his eyes without raising his arms all the way to his face, e.g., to a position below position B. In this case, the display may be activated when the display is turned toward the user's face. Alternatively, the state of the display may be changed only when the arm (and the mobile terminal) is raised at least a prescribed distance.

Moreover, the mobile terminal 100 may change states based on a typical motion of the user to view a watch. As previously described, with reference to Figure 3A, the motion may be raising the arm from a natural resting position A (e.g., arms hanging) to a raised position B (e.g., typical viewing position). However, other types of motion or gestures of the user may be used to change the state of the display. For example, a combination of movements in which the user raises the arm while also rotating his or her wrist may be required prior to changing the state of the mobile terminal 100. In this example, the amount of distance in which the user raises the arm may be less than as previously described with reference to Figure 3A. The amount of distance in which the mobile terminal 100 is raised may also be incorporated, for example, to include situations where the user's arm is raised from a position higher than position A of Figure 3A.

In another example, a prescribed type of gesture or motion may be used to change the state of the mobile terminal 100. For example, a gesture or motion in a prescribed pattern may be used. Such a gesture or pattern may include, in addition to those described above, shaking or moving the mobile terminal in a circle, for example. It should be appreciated that the distances, amount of movements or sensitivity in sensing may be controlled based on preference settings which may be provided. It should also be appreciated that other functions of the mobile terminal 100 may be assigned to the sensed motion or position, for example, a call answering function.

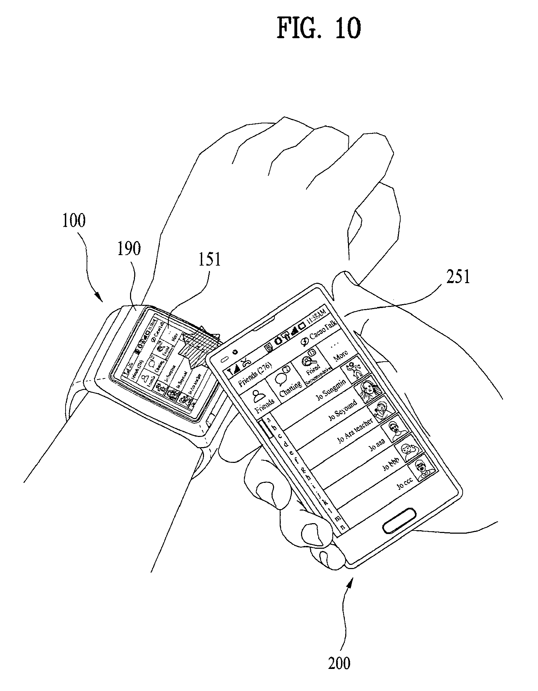

Figures 10 to 12 are diagrams illustrating an embodiment that the watch type mobile terminal 100 according to one embodiment is synchronized with an external terminal. the watch type mobile terminal 100 may be synchronized with an external terminal 200 via a short range communication module 114 capable of transmitting/receiving data to/from two terminals provided in a short range.

The size of the watch type mobile terminal 100 according to the embodiment is restricted to be put on the user's arm and it is restricted to enlarge the display 151 by a preset size or more. The screen displayed on the display 151 is relatively small and characters on the display are accordingly small or the amount of the information provided to one screen is relatively small. In addition, the size of the display 151 is too small for the user to carry out touch input. Especially, it is quite difficult to use a keypad having a plurality of small buttons in the display.

In case there is an external terminal 200 having a relatively larger display 151, the watch type mobile terminal is synchronized with the external terminal 200 and second image information is output on the external display, such that a touch sensor provided in the external terminal 200 may be used in carry out a command input by the user.

The watch type mobile terminal 100 and the external terminal 200 may be set to be synchronized, once they approach in a preset short range. For the external terminal 200 nearby to not to be synchronized with the watch type mobile terminal 100 unintentionally, the external terminal 200 and the watch type mobile terminal 100 may be in contact with each other to apply vibration to the terminals simultaneously. In this embodiment, a gesture for applying the vibration to the terminals simultaneously may be a synchronization gesture. When the synchronization gesture is sensed, the watch type mobile terminal 100 and the external terminal 200 may be synchronized with each other.

The position sensors 143 and 144 may sense the same type of vibration in the watch type mobile terminal 100 and the external terminal 200. When the distance between the terminals 100 and 200 is within the synchronization distance, the controller 180 determines that a synchronization pattern is performed and controls the short range communication module 114 to synchronize the watch type mobile terminal 100 with the external terminal 200.

The synchronization distance is the distance in which the terminals are collided with each other to cause vibration and it may be set as a quite short distance. Alternatively, touch input may be carried out to the display 151 to set synchronization with the external terminal 200, only to synchronize the terminal 100 with the external terminal 200.

When the watch type mobile terminal 100 is synchronized with the external terminal 200, the short range communication module 114 may transmit second image information to the external terminal 200 and receive a touch signal input to the external mobile 200. The controller 180 may recognize the touch signal input to the display 151 as input signal and implement control corresponding to the input signal.

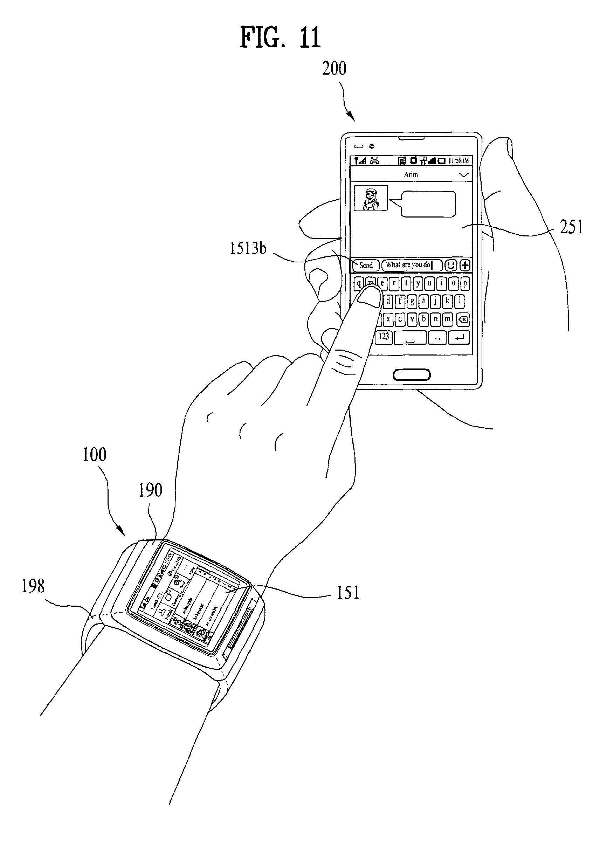

Figure 11 is a diagram illustrating a usage state of the watch type mobile terminal 100 when the arm having the watch type mobile terminal 100 is arranged in opposite to the hand holding the external terminal 200. In the drawing, the watch type mobile terminal 100 is put on the left hand of the user. The screen displayed on the display 151 of the watch type mobile terminal 100 is a screen in a right hand mode and the screen displayed on a display 251 of the external terminal 200 is in a left hand mode. When holding the external terminal 200 in the right hand, the user may touch the display 251 of the external terminal 200 with the left hand and input a touch signal.

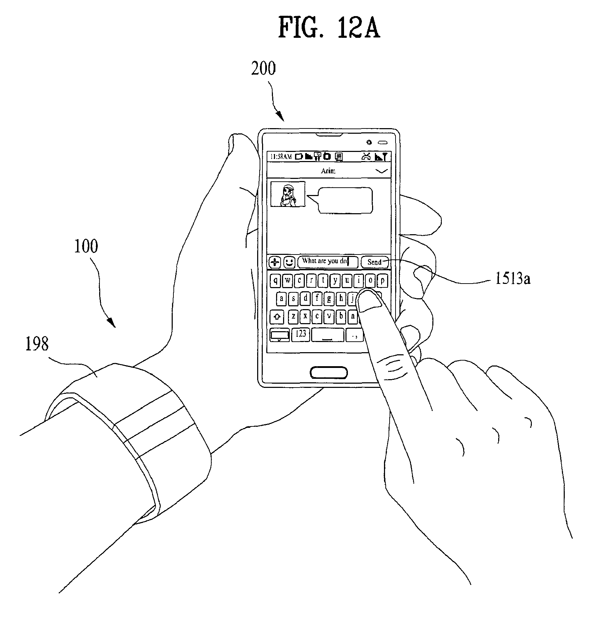

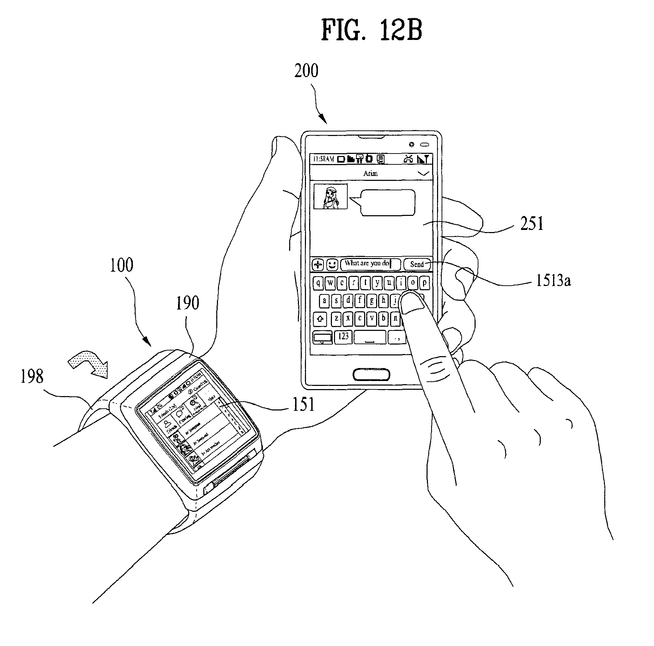

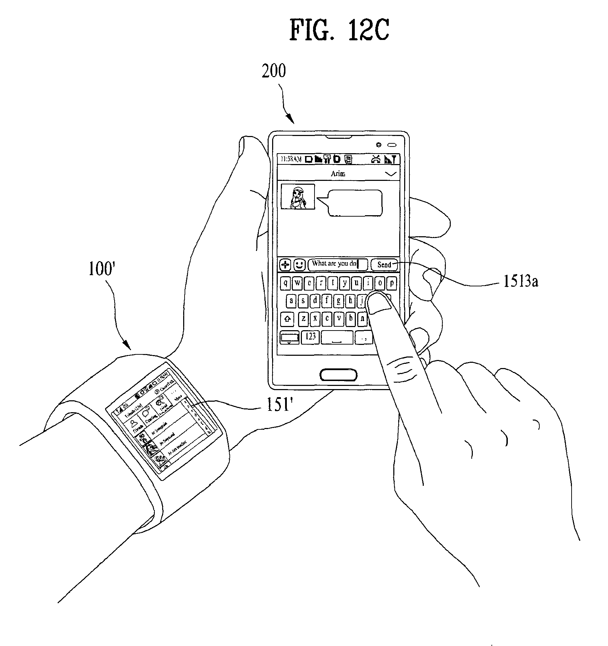

Figures 12 to 12C are diagrams illustrating a usage state, in case the arm having the watch type mobile terminal 100 and the hand holding the external terminal 200 are positioned in the same direction. In the drawings, the watch type mobile terminal 100 is put on the left hand. The screen displayed on the display 151 of the mobile terminal 100 is a screen of the right hand mode. The screen displayed on the display 251 of the external terminal 200 is a screen of the left hand mode. When holding the external terminal 200 in the left hand, the user touches the display 151 of the external terminal 200 with the right hand and input a touch signal.

When the arm having the watch type mobile terminal 100 and hand the external mobile 200 holding the external mobile 200 are positioned in the same direction, the user is holding the external terminal 200 in the hand having the watch type mobile terminal 100 put thereon, such that the watch type mobile terminal 100 may be arranged toward the direction of the gravity as shown in Figure12Aonly to make the user not watch the display 151 of the watch type mobile terminal 100. The position of the case 190 provided in the watch type mobile terminal 100 may be changed, to position the display 151 in the reverse direction of the gravity.

The user may rotate the strap 198 of the watch type mobile terminal 100 to make the case 190 upward. It is preferred that the watch type mobile terminal 100 may further include a moving module configured to move the case 190 along the strap 198 on the user's arm. Accordingly, the case 190may be positioned in the inside of the wrist as shown in Figure12Band the display 151 may be toward in the reverse direction of the gravity.

The same screen may be displayed on the watch type mobile terminal 100 and the external terminal 200. However, as shown in Figures 11 to 12C, a plurality of selectable objects may be displayed on the display 151 of the watch type mobile terminal 100 and the controller 180 may transmit a second image information for the display 251 to display a screen corresponding to the object selected on the display 151 of the watch type mobile terminal 100 via the short range communication module 114.

Specifically, in a menu screen configured of a plurality of entry steps, upper menus may be displayed on the display 151 of the watch type mobile terminal 100 and lower menus may be displayed on the display 251 of the external mobile 200.

Figure12Cis a diagram of a watch type mobile terminal 100' according to another embodiment. The watch type mobile terminal according to this embodiment includes a case and a strap which are integrally formed with each other. A flexible display device may be corresponding to the case 190 and the strap 198 as shown in Figure12B. The flexible display device may be wound around the user's wrist and a predetermined portion of the flexible display device may display first image information.

In this instance, a controller may control only the position of the screen displayed on the flexible display device to be changed, without moving the watch type mobile terminal 100' physically. In a state where the watch type mobile terminal 100 is synchronized with an external terminal 200, a display 151' configured to output the first image information may be positioned in the reverse direction of the gravity.

As previously set forth, the present disclosure is directed to a mobile terminal that substantially obviates one or more problems due to limitations and disadvantages of the related art. One object of the present disclosure is to provide a watch type mobile terminal which can activate a display simply. According to at least one embodiment of the present disclosure, the screen of the watch type mobile terminal 100 may be activated, without the user's pressing an auxiliary button. Accordingly, use convenience may be enhanced. Furthermore, the user interface and button proper to the hand carrying out the touch input may be provided by sensing in which arm the user is putting on the watch type mobile terminal. Accordingly, use convenience may be further enhanced. Still further, the watch type mobile terminal may be in communication with the external terminal 200. The difficulties in carrying out touch input caused by the small screen and the deteriorated visibility may be may be overcome.

Another object of the present disclosure is to provide improved methods of controlling and accessing a mobile terminal for application in the health care field. For example, patients or practitioners may more easily control and access the mobile terminal 100 when they are unable to press a button or when their hands are not available. The motion and position based control of the mobile terminal 100 may allow such users to perform various function more easily, for example, to turn on/off the display, to accept incoming calls or messages, or another appropriate type of functions.

As embodied and broadly described herein, a watch type mobile terminal may include a display, a case coupled to the display, a strap coupled to the case, a sensor configured to sense at least one of a movement or position of the watch type mobile terminal, and a controller configured to control the display, wherein, when the sensed movement or position of the watch type mobile terminal corresponds to a prescribed movement or position, a state of the display is changed from an inactive state to an active state.

The prescribed movement or position may correspond to a prescribed pattern that includes a movement of the watch type mobile terminal from a first position outside a prescribed viewing area of a user to a second position inside the prescribed viewing area and angled to face the user. The second position may be provided higher than the first position. The prescribed viewing area may be an area within a prescribed angular range and a prescribed distance related to a user. The prescribed viewing area may be in front of the user.

The prescribed movement or position may include a position in which the display is angled to face the user at a prescribed distance in front of a user. The prescribed movement or position may be a position of the display at a prescribed distance from a user's face and may correspond to a user movement to raise and rotate the watch type mobile terminal such that the display faces the user. The sensed movement or position may correspond to an angle of a user's forearm.

The prescribed movement or position may correspond to prescribed patterns that include a first pattern in which the watch type mobile terminal is moved in a horizontal direction while the display is facing lateral to the movement at a prescribed angle, and a second pattern in which the display is brought to rest in a prescribed orientation after movement in a vertical direction.

An image may be displayed on the display in response to the change in state, an orientation of the image on the display being changed based on the sensed movement or position. Moreover, the controller may determine whether the watch type mobile terminal is provided on a user's right arm or left arm based on an angle and orientation of the display or movement of a user.

The controller may determine whether the watch type mobile terminal is provided on a user's right arm or left arm based on the sensed movement or position of the watch type mobile terminal, wherein an image is displayed on the display in a left hand mode when the watch type mobile terminal is on the right arm and the image is displayed in a right hand mode when the watch type mobile terminal is on the left arm. The image in the left hand mode may include at least one of an input button, a scroll bar or a menu button provided on a left side of the image, and the image in the right hand mode includes at least one of the input button, the scroll bar or the menu button provided on a right side of the image. Moreover, the controller may change the state of the display to the inactive state when the display is angled outside a prescribed angular range for a prescribed amount of time.

The watch type mobile terminal may also include a short range communication module configured to communicate with an external terminal, wherein the controller controls the short range communication module to synchronize the watch type mobile terminal with the external terminal based on the sensed movement and position of the display. In a synchronized state, a second image may be displayed on the external terminal, the second image being in a right hand mode when the image on the display is in a left hand mode and the second image being in a left hand mode when the image on the display is in a right hand mode.

In one embodiment, a method of controlling a watch type mobile terminal having a display, a case coupled to the display and a strap couple to the case may include sensing at least one of a movement or position of the watch type mobile terminal and controlling an operation of the watch type mobile terminal based on the sensed movement or position of the watch type mobile terminal. Controlling the operation may include changing a state of the display from an inactive state to an active state when the sensed movement or position of the watch type mobile terminal corresponds to a prescribed movement or position.

The prescribed movement or position may correspond to a prescribed pattern that includes a movement of the watch type mobile terminal from a first position outside a prescribed viewing area of a user to a second position inside the prescribed viewing area and angled to face the user. The prescribed movement or position may also include a position in which the display is angled to face the user at a prescribed distance in front of a user.

In one embodiment, a watch type mobile terminal may include a display configured to display a first image information, a case of which a front surface the display is coupled to, a strap connected to the case and securely wound around a user's arm; a position sensor configured to sense at least one of inclination of the case and variation of a position of the case, and a controller configured to convert a state of the display into an activated state from a deactivated state, when inclination variation or position variation corresponding to a preset activating gesture is sensed by the position sensor.

The activating gesture may include a first gesture which moves in a perpendicular direction with respect to a direction of the gravity, in a state where the case is tilted to position the display toward a lateral surface, and a second gesture which stops in a state where the display is arranged in the reverse direction of the gravity.

The controller may control a lower portion of a screen to be positioned in a direction of the movement according to the first gesture of the display, the screen displayed when the state of the display is converted into the activated state.

The controller may determine that the watch type mobile terminal is put on the user's right arm, when the direction of the movement according to the first gesture is (+) with respect to the gravity, and determine that the watch type mobile terminal is put on the user's left arm, when the direction of the movement according to the first gesture is (-) with respect to the gravity.

The controller may determine whether the watch type mobile terminal is put on the user's right arm or left arm based on the inclination sensed by the position sensor, and the controller may control a screen of a left hand mode to be displayed on the display when it is determined that the watch type mobile terminal is put on the right arm and a screen of a right hand mode to be displayed on the display when it is determined that the watch type mobile terminal is put on the left arm.

The controller may determine that the watch type mobile terminal is put on the left arm in case the case is tilted in a left direction when the state of the display into an activate state, and that the watch type mobile terminal is put on the right arm in case the case is tilted in a right direction when the state of the display into an activate state.

The controller may determine whether the watch type mobile terminal is put on the right arm or the left arm based on a main inclination sensed by the position sensor in the deactivated state of the display.

In the screen of the left hand mode, at least one of an input button, a scroll index and a specific menu entry button may be provided in a left portion. In the screen of the right hand mode, at least one of the input button, the scroll index and the specific menu entry button may be provided in a right portion.

The watch type mobile terminal may further include a touch button provided in a lateral surface of the case, the touch button of which a position is changeable wherein the controller determines whether the watch type mobile terminal is put on the user's right arm or left arm based on the inclination sensed by the position sensor, and the controller controls the button is positioned at left lateral surface, when it is determined that the watch type mobile terminal is put on the right arm and the button is positioned at right lateral surface, when it is determined that the watch type mobile terminal is put on the left arm.

The controller may convert the state of the display into the deactivated state, when a front surface of the case is out of a preset range of usage angles for a preset time period.

The usage angles may include angles of 30° or less in a right and left direction, angles of 60° or less in a downward direction and angles of 10° or less in an upward direction, with respect to a flat state.

The position sensor may be an acceleration sensor which senses the position variation by measuring variation of the acceleration.

The position sensor may be a gyrosensor which senses the position variation by measuring variation of an angular velocity.

The watch type mobile terminal may further include a short range communication module configured to transmit a second image information to an external device and to receive a touch signal input to the external terminal, wherein the controller controls the short range communication module to synchronize the watch type mobile terminal with the external terminal to transmit the second image information to the external terminal and to receive the touch signal output to the external terminal, when the position sensor senses position variation corresponding to a preset synchronizing gesture.

The controller may determine that the synchronizing gesture is input, when the same vibration is sensed in the watch type mobile terminal and the external mobile simultaneously and when the short range communication module senses that the distance between the watch type mobile terminal and the external terminal is a synchronization distance or less.

The second image information may be a right hand mode, when the first image information is a left hand mode. The second image information is a left hand mode, when the first image information is a right hand mode.

The watch type mobile terminal may further include a moving module configured to move the position of the case from the user's arm along the strap, wherein the controller controls the moving module to position the display toward the reverse direction of the gravity, when the position sensor senses that the display of the watch type mobile terminal synchronized with the external terminal is toward the gravity.

The second image information may be the left hand mode when the first image information is the left hand mode and the second image information may be the right hand mode when the first image information is the right hand mode, in case the position sensor senses that the display of the watch type mobile terminal synchronized with the external terminal is toward the gravity.

The case and the strap may be provided in a flexible display device which is wound around the user's wrist, with the first image information displayed on a predetermined portion thereof, and the first image information may be displayed on a predetermined portion of the flexible display device in the reverse direction of the gravity, in the deactivated state with the external device.

The first image information may include a plurality of selectable objects, and the second image information may be a screen corresponding to the selected object from the display of the watch type mobile terminal.

The controller may display a plurality of images when the display is activated, and the plurality of the screens may be selected from recently used applications, most frequently used applications and applications associated with a user's current position in accordance with one criterion.

Any reference in this specification to "one embodiment," "an embodiment," "example embodiment," etc., means that a particular feature, structure, or characteristic described in connection with the embodiment is included in at least one embodiment of the disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A watch type mobile terminal comprising:
a display (151)
a case (190) coupled to the display (151);
a strap (198) coupled to the case (190)
a sensor (140) configured to sense at least one of a movement or position of the watch type mobile terminal; and
a controller (180) configured to control the display (151),
wherein, when the sensed movement or position of the watch type mobile terminal corresponds to a prescribed movement or position, a state of the display (151) is changed from an inactive state to an active state.

2. The watch type mobile terminal according to claim 1,
wherein the prescribed movement or position corresponds to a prescribed pattern that includes a movement of the watch type mobile terminal from a first position outside a prescribed viewing area of a user to a second position inside the prescribed viewing area and angled to face the user.

3. The watch type mobile terminal according to claim 2,
wherein the prescribed viewing area is an area within a prescribed angular range and a prescribed distance related to a user.

4. The watch type mobile terminal according to claim 2,
wherein the second position is provided higher than the first position.

5. The watch type mobile terminal according to claim 1,
wherein the prescribed movement or position includes a position in which the display (151) is angled to face the user at a prescribed distance in front of a user or a position of the display (151) at a prescribed distance from a user's face.

6. The watch type mobile terminal according to claim 1,
wherein the prescribed movement or position corresponds to a user movement to raise and rotate the watch type mobile terminal such that the display (151) faces the user.

7. The watch type mobile terminal according to claim 1,
wherein the sensed movement or position corresponds to an angle of a user's forearm.

8. The watch type mobile terminal according to claim 1,
wherein the prescribed movement or position corresponds to prescribed patterns that include
a first pattern in which the watch type mobile terminal is moved in a horizontal direction while the display (151) is facing lateral to the movement at a prescribed angle, and
a second pattern in which the display (151) is brought to rest in a prescribed orientation after movement in a vertical direction.

9. The watch type mobile terminal according to claim 1,
wherein an image is displayed on the display (151) in response to the change in state, an orientation of the image on the display (151) being changed based on the sensed movement or position.

10. The watch type mobile terminal according to claim 1,
wherein the controller (180) determines whether the watch type mobile terminal is provided on a user's right arm or left arm based on an angle and orientation of the display (151) or movement of a user.

11. The watch type mobile terminal according to claim 1,
wherein the controller (180) determines whether the watch type mobile terminal is provided on a user's right arm or left arm based on the sensed movement or position of the watch type mobile terminal, wherein an image is displayed on the display (151) in a left hand mode when the watch type mobile terminal is on the right arm and the image is displayed in a right hand mode when the watch type mobile terminal is on the left arm.

12. The watch type mobile terminal according to claim 11,
wherein the image in the left hand mode includes at least one of an input button, a scroll bar or a menu button provided on a left side of the image, and the image in the right hand mode includes at least one of the input button, the scroll bar or the menu button provided on a right side of the image.

13. The watch type mobile terminal according to claim 1,
wherein the controller (180) changes the state of the display (151) to the inactive state when the display (151) is angled outside a prescribed angular range for a prescribed amount of time.

14. The watch type mobile terminal according to claim 1, further including
a short range communication module configured to communicate with an external terminal,
wherein the controller (180) controls the short range communication module to synchronize the watch type mobile terminal with the external terminal based on the sensed movement and position of the display (151).

15. The watch type mobile terminal according to claim 14,
wherein, in a synchronized state, a second image is displayed on the external terminal, the second image being in a right hand mode when the image on the display (151) is in a left hand mode and the second image being in a left hand mode when the image on the display (151) is in a right hand mode.
